# EUROPEAN PATENT APPLICATION

(11) **EP 3 713 015 A1**
(43) Date of publication of application: **23.09.2020**
(21) Application number: 20163047.2
(22) Date of filing: 13.03.2020
(51) Int. Cl.: H01Q 5/385, H01Q 9/28, H01Q 9/42, H01Q 19/10, H01Q 19/30, H01Q 21/26, H01Q 23/00

(54) **ANTENNA WITH PARASITIC ELEMENTS**

(30) Priority: 19.03.2019 US 201962820713 P; 28.02.2020 US 202016805503
(71) Applicant: Wilson Electronics, LLC, St. George, UT 84790 (US)
(72) Inventor: JANG, Taehee, Allen, Texas 75013 (US); ASHWORTH, Christopher Ken, Toquerville, Utah 84774 (US); RUHMAN, Brooks Stephen, Dallas,Texas 75214 (US)
(74) Representative: ip21 Ltd

(57) **Abstract**

Technology for a wire antenna is disclosed. The wire antenna can include a vertical center feed line. The wire antenna can include a horizontal antenna element carried by the vertical center feed line. The horizontal antenna element can have a first conductive surface and a second conductive surface substantially opposite to the first conductive surface. The wire antenna can include a first parasitic element adjacent to the first conductive surface and spaced at a first selected parasitic distance from the horizontal antenna element. The wire antenna can include a second parasitic element substantially orthogonal to the first parasitic element. The second parasitic element can be adjacent to the first conductive surface and spaced at a second selected parasitic distance from the horizontal antenna element.

## Description

### BACKGROUND

Signal boosters and repeaters can be used to increase the quality of wireless communication between a wireless device and a wireless communication access point, such as a cell tower. Signal boosters can improve the quality of the wireless communication by amplifying, filtering, and/or applying other processing techniques to uplink and downlink signals communicated between the wireless device and the wireless communication access point.

As an example, the signal booster can receive, via an antenna, downlink signals from the wireless communication access point. The signal booster can amplify the downlink signal and then provide an amplified downlink signal to the wireless device. In other words, the signal booster can act as a relay between the wireless device and the wireless communication access point. As a result, the wireless device can receive a stronger signal from the wireless communication access point. Similarly, uplink signals from the wireless device (e.g., telephone calls and other data) can be directed to the signal booster. The signal booster can amplify the uplink signals before communicating, via an antenna, the uplink signals to the wireless communication access point.

### BRIEF DESCRIPTION OF THE DRAWINGS

Features and advantages of the disclosure will be apparent from the detailed description which follows, taken in conjunction with the accompanying drawings, which together illustrate, by way of example, features of the disclosure; and, wherein:
FIG. 1 illustrates a signal booster in communication with a wireless device and a base station in accordance with an example;
FIG. 2 illustrates a wire antenna having two parasitic elements in accordance with an example;
FIG. 3 illustrates a wire antenna communicatively coupled to a signal repeater in accordance with an example;
FIG. 4 illustrates two parasitic elements included in a wire antenna in accordance with an example;
FIG. 5 illustrates a wire antenna having a horizontal antenna element and two parasitic elements in accordance with an example;
FIG. 6A illustrates a dipole antenna in accordance with an example;
FIG. 6B illustrates a dipole antenna with a parasitic element in accordance with an example;
FIG. 7 illustrates various shapes for parasitic elements in accordance with an example;
FIG. 8 illustrates a dipole antenna having a first parasitic element and a second parasitic element in accordance with an example;
FIG. 9A illustrates a dual-polarized dipole antenna in accordance with an example;
FIG. 9B illustrates a dual-polarized dipole antenna with a parasitic element in accordance with an example;
FIG. 10 illustrates a dipole antenna having a first parasitic element and a second parasitic element in accordance with an example;
FIG. 11 illustrates a horizontal dipole element for a dipole antenna in accordance with an example;
FIG. 12 illustrates a dipole antenna having a first parasitic element and a second parasitic element in accordance with an example;
FIG. 13 illustrates a radiation pattern for a dipole antenna that excludes a parasitic element in accordance with an example;
FIG. 14 illustrates a radiation pattern for a dipole antenna that includes a parasitic element in accordance with an example;
FIG. 15A is a table that shows a gain comparison for a dipole antenna that excludes parasitic element(s) versus a dipole element that includes parasitic element(s) in accordance with an example;
FIG. 15B is a table that shows a beamwidth comparison for a dipole antenna that excludes parasitic element(s) versus a dipole element that includes parasitic element(s) in accordance with an example; and
FIG. 16 illustrates a wireless device in accordance with an example.

Reference will now be made to the exemplary embodiments illustrated, and specific language will be used herein to describe the same. It will nevertheless be understood that no limitation of the scope of the invention is thereby intended.

### DETAILED DESCRIPTION

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating steps and operations and do not necessarily indicate a particular order or sequence.

### EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

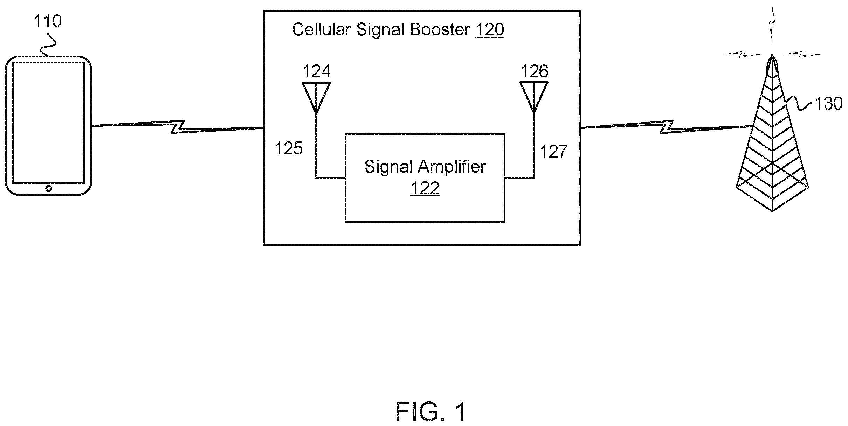

FIG. 1 illustrates an exemplary signal booster 120 in communication with a wireless device 110 and a base station 130. The signal booster 120 can be referred to as a repeater. A repeater can be an electronic device used to amplify (or boost) signals. The signal booster 120 (also referred to as a cellular signal amplifier) can improve the quality of wireless communication by amplifying, filtering, and/or applying other processing techniques via a signal amplifier 122 to uplink signals communicated from the wireless device 110 to the base station 130 and/or downlink signals communicated from the base station 130 to the wireless device 110. In other words, the signal booster 120 can amplify or boost uplink signals and/or downlink signals bi-directionally. In one example, the signal booster 120 can be at a fixed location, such as in a home or office. Alternatively, the signal booster 120 can be attached to a mobile object, such as a vehicle or a wireless device 110.

In one configuration, the signal booster 120 can include an integrated device antenna 124 (e.g., an inside antenna or a coupling antenna) and an integrated node antenna 126 (e.g., an outside antenna). The integrated node antenna 126 can receive the downlink signal from the base station 130. The downlink signal can be provided to the signal amplifier 122 via a second coaxial cable 127 or other type of radio frequency connection operable to communicate radio frequency signals. The signal amplifier 122 can include one or more cellular signal amplifiers for amplification and filtering. The downlink signal that has been amplified and filtered can be provided to the integrated device antenna 124 via a first coaxial cable 125 or other type of radio frequency connection operable to communicate radio frequency signals. The integrated device antenna 124 can wirelessly communicate the downlink signal that has been amplified and filtered to the wireless device 110.

Similarly, the integrated device antenna 124 can receive an uplink signal from the wireless device 110. The uplink signal can be provided to the signal amplifier 122 via the first coaxial cable 125 or other type of radio frequency connection operable to communicate radio frequency signals. The signal amplifier 122 can include one or more cellular signal amplifiers for amplification and filtering. The uplink signal that has been amplified and filtered can be provided to the integrated node antenna 126 via the second coaxial cable 127 or other type of radio frequency connection operable to communicate radio frequency signals. The integrated device antenna 126 can communicate the uplink signal that has been amplified and filtered to the base station 130.

In one example, the signal booster 120 can filter the uplink and downlink signals using any suitable analog or digital filtering technology including, but not limited to, surface acoustic wave (SAW) filters, bulk acoustic wave (BAW) filters, film bulk acoustic resonator (FBAR) filters, ceramic filters, waveguide filters or low-temperature co-fired ceramic (LTCC) filters.

In one example, the signal booster 120 can send uplink signals to a node and/or receive downlink signals from the node. The node can comprise a wireless wide area network (WWAN) access point (AP), a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or another type of WWAN access point.

In one configuration, the signal booster 120 used to amplify the uplink and/or a downlink signal is a handheld booster. The handheld booster can be implemented in a sleeve of the wireless device 110. The wireless device sleeve can be attached to the wireless device 110, but can be removed as needed. In this configuration, the signal booster 120 can automatically power down or cease amplification when the wireless device 110 approaches a particular base station. In other words, the signal booster 120 can determine to stop performing signal amplification when the quality of uplink and/or downlink signals is above a defined threshold based on a location of the wireless device 110 in relation to the base station 130.

In one example, the signal booster 120 can include a battery to provide power to various components, such as the signal amplifier 122, the integrated device antenna 124 and the integrated node antenna 126. The battery can also power the wireless device 110 (e.g., phone or tablet). Alternatively, the signal booster 120 can receive power from the wireless device 110.

In one configuration, the signal booster 120 can be a Federal Communications Commission (FCC)-compatible consumer signal booster. As a non-limiting example, the signal booster 120 can be compatible with FCC Part 20 or 47 Code of Federal Regulations (C.F.R.) Part 20.21 (March 21, 2013). In addition, the signal booster 120 can operate on the frequencies used for the provision of subscriber-based services under parts 22 (Cellular), 24 (Broadband PCS), 27 (AWS-1, 700 MHz Lower A-E Blocks, and 700 MHz Upper C Block), and 90 (Specialized Mobile Radio) of 47 C.F.R. The signal booster 120 can be configured to automatically self-monitor its operation to ensure compliance with applicable noise and gain limits. The signal booster 120 can either self-correct or shut down automatically if the signal booster's operations violate the regulations defined in FCC Part 20.21.

In one configuration, the signal booster 120 can enhance the wireless connection between the wireless device 110 and the base station 130 (e.g., cell tower) or another type of wireless wide area network (WWAN) access point (AP). The signal booster 120 can boost signals for cellular standards, such as the Third Generation Partnership Project (3GPP) Long Term Evolution (LTE) Release 8, 9, 10, 11, 12, 13, 14, 15 or 16, 3GPP 5G Release 15 or 16, or Institute of Electronics and Electrical Engineers (IEEE) 802.16. In one configuration, the signal booster 120 can boost signals for 3GPP LTE Release 16.0.0 (January 2019) or other desired releases. The signal booster 120 can boost signals from the 3GPP Technical Specification (TS) 36.101 (Release 16 July 2019) bands or LTE frequency bands. For example, the signal booster 120 can boost signals from the LTE frequency bands: 2, 4, 5, 12, 13, 17, 25, and 26. In addition, the signal booster 120 can boost selected frequency bands based on the country or region in which the signal booster is used, including any of bands 1-85 or other bands, as disclosed in 3GPP TS 36.104 V16.0.0 (January 2019), and depicted in Table 1:

**Table 1:**

| **LTE Operating Band** | **Uplink (UL) operating band BS receive UE transmit** | **Downlink (DL) operating band BS transmit UE receive** | **Duplex Mode** |
|---|---|---|---|
| | F_{UL_low} - F_{UL_high} | F_{DL_low} - F_{DL_high} | |
| 1 | 1920 MHz - 1980 MHz | 2110 MHz - 2170 MHz | FDD |
| 2 | 1850MHz - 1910 MHz | 1930 MHz - 1990 MHz | FDD |
| 3 | 1710 MHz - 1785 MHz | 1805 MHz - 1880 MHz | FDD |
| 4 | 1710 MHz - 1755 MHz | 2110 MHz - 2155 MHz | FDD |
| 5 | 824 MHz - 849 MHz | 869 MHz - 894MHz | FDD |
| 6 (NOTE 1) | - 830 MHz 840 MHz | - 875 MHz 885 MHz | FDD |
| 7 | 2500 MHz - 2570 MHz | 2620 MHz - 2690 MHz | FDD |
| 8 | 880 MHz - 915 MHz | 925 MHz - 960 MHz | FDD |
| 9 | 1749.9 MHz - 1784.9 MHz | 1844.9 MHz - 1879.9 MHz | FDD |
| 10 | 1710 MHz - 1770 MHz | 2110 MHz - 2170 MHz | FDD |
| 11 | 1427.9 MHz - 1447.9 MHz | 1475.9 MHz - 1495.9 MHz | FDD |
| 12 | 699 MHz - 716 MHz | 729 MHz - 746 MHz | FDD |
| 13 | 777 MHz - 787 MHz | 746 MHz - 756 MHz | FDD |
| 14 | 788 MHz - 798 MHz | 758 MHz - 768 MHz | FDD |
| 15 | Reserved | Reserved | FDD |
| 16 | Reserved | Reserved | FDD |
| 17 | 704 MHz - 716 MHz | 734 MHz - 746 MHz | FDD |
| 18 | 815 MHz - 830 MHz | 860 MHz - 875 MHz | FDD |
| 19 | 830 MHz - 845 MHz | 875 MHz - 890 MHz | FDD |
| 20 | 832 MHz - 862 MHz | 791 MHz - 821 MHz | FDD |
| 21 | 1447.9 MHz - 1462.9 MHz | 1495.9 MHz - 1510.9 MHz | FDD |
| 22 | 3410 MHz - 3490 MHz | 3510 MHz - 3590 MHz | FDD |
| 23¹ | 2000 MHz - 2020 MHz | 2180 MHz - 2200 MHz | FDD |
| 24 | 1626.5 MHz - 1660.5 MHz | 1525 MHz - 1559 MHz | FDD |
| 25 | 1850 MHz - 1915 MHz | 1930 MHz - 1995 MHz | FDD |
| 26 | 814 MHz - 849 MHz | 859 MHz - 894 MHz | FDD |
| 27 | 807 MHz - 824 MHz | 852 MHz - 869 MHz | FDD |
| 28 | 703 MHz - 748 MHz | 758 MHz - 803 MHz | FDD |
| 29 | N/A | 717 MHz - 728 MHz | FDD (NOTE 2) |
| 30 | 2305 MHz - 2315 MHz | 2350 MHz - 2360 MHz | FDD |
| 31 | 452.5 MHz - 457.5 MHz | 462.5 MHz - 467.5 MHz | FDD |
| 32 | N/A | 1452 MHz - 1496 MHz | FDD (NOTE 2) |
| 33 | 1900 MHz - 1920 MHz | 1900 MHz - 1920 MHz | TDD |
| 34 | 2010 MHz - 2025 MHz | 2010 MHz - 2025 MHz | TDD |
| 35 | 1850MHz - 1910 MHz | 1850MHz - 1910 MHz | TDD |
| 36 | 1930 MHz - 1990 MHz | 1930 MHz - 1990 MHz | TDD |
| 37 | 1910 MHz - 1930 MHz | 1910 MHz - 1930 MHz | TDD |
| 38 | 2570 MHz - 2620 MHz | 2570 MHz - 2620 MHz | TDD |
| 39 | 1880 MHz - 1920 MHz | 1880 MHz - 1920 MHz | TDD |
| 40 | 2300 MHz - 2400 MHz | 2300 MHz - 2400 MHz | TDD |
| 41 | 2496 MHz - 2690 MHz | 2496 MHz - 2690 MHz | TDD |
| 42 | 3400 MHz - 3600 MHz | 3400 MHz - 3600 MHz | TDD |
| 43 | 3600 MHz - 3800 MHz | 3600 MHz - 3800 MHz | TDD |
| 44 | 703 MHz - 803 MHz | 703 MHz - 803 MHz | TDD |
| 45 | 1447 MHz - 1467 MHz | 1447 MHz - 1467 MHz | TDD |
| 46 | 5150 MHz - 5925 MHz | 5150 MHz - 5925 MHz | TDD (NOTE 3, NOTE 4) |
| 47 | 5855 MHz - 5925 MHz | 5855 MHz - 5925 MHz | TDD |
| 48 | 3550 MHz - 3700 MHz | 3550 MHz - 3700 MHz | TDD |
| 49 | 3550 MHz - 3700 MHz | 3550 MHz - 3700 MHz | TDD (NOTE 8) |
| 50 | 1432 MHz - 1517 MHz | 1432 MHz - 1517 MHz | TDD |
| 51 | 1427 MHz - 1432 MHz | 1427 MHz - 1432 MHz | TDD |
| 52 | 3300 MHz - 3400 MHz | 3300 MHz - 3400 MHz | TDD |
| 53 | 2483.5 MHz - 2495 MHz | 2483.5 MHz - 2495 MHz | TDD |
| 65 | 1920 MHz - 2010 MHz | 2110 MHz - 2200 MHz | FDD |
| 66 | 1710 MHz - 1780 MHz | 2110 MHz - 2200 MHz | FDD (NOTE 5) |
| 67 | N/A | 738 MHz - 758 MHz | FDD (NOTE 2) |
| 68 | 698 MHz - 728 MHz | 753 MHz - 783 MHz | FDD |
| 69 | N/A | 2570 MHz - 2620 MHz | FDD (NOTE 2) |
| 70 | 1695 MHz - 1710 MHz | 1995 MHz - 2020 MHz | FDD⁶ |
| 71 | 663 MHz - 698 MHz | 617 MHz - 652 MHz | FDD |
| 72 | 451 MHz - 456 MHz | 461 MHz - 466 MHz | FDD |
| 73 | 450 MHz - 455 MHz | 460 MHz - 465 MHz | FDD |
| 74 | 1427 MHz - 1470 MHz | 1475 MHz - 1518 MHz | FDD |
| 75 | N/A | 1432 MHz - 1517 MHz | FDD (NOTE 2) |
| 76 | N/A | 1427 MHz - 1432 MHz | FDD (NOTE 2) |
| 85 | 698 MHz - 716 MHz | 728 MHz - 746 MHz | FDD |
| 87 | 410 MHz - 415 MHz | 420 MHz - 425 MHz | FDD |
| 88 | 412 MHz - 417 MHz | 422 MHz - 427 MHz | FDD |
| NOTE 1: | Band 6, 23 are not applicable. | | |
| NOTE 2: | Restricted to E-UTRA operation when carrier aggregation is configured. The downlink operating band is paired with the uplink operating band (external) of the carrier aggregation configuration that is supporting the configured Pcell. | | |
| NOTE 3: | This band is an unlicensed band restricted to licensed-assisted operation using Frame Structure Type 3. | | |
| NOTE 4: | Band 46 is divided into four sub-bands as in Table 5.5-1A. | | |
| NOTE 5: | The range 2180 - 2200 MHz of the DL operating band is restricted to E-UTRA operation when carrier aggregation is configured. | | |
| NOTE 6: | The range 2010-2020 MHz of the DL operating band is restricted to E-UTRA operation when carrier aggregation is configured and TX-RX separation is 300 MHz. The range 2005-2020 MHz of the DL operating band is restricted to E-UTRA operation when carrier aggregation is configured and TX-RX separation is 295 MHz. | | |
| NOTE 7: | Void | | |
| NOTE 8: | This band is restricted to licensed-assisted operation using Frame Structure Type 3. | | |

In another configuration, the signal booster 120 can boost signals from the 3GPP Technical Specification (TS) 38.104 (Release 16 July 2019) bands or 5G frequency bands. In addition, the signal booster 120 can boost selected frequency bands based on the country or region in which the repeater is used, including any of bands n1 - n86 in frequency range 1 (FR1), n257 - n261 in frequency range 2 (FR2), or other bands, as disclosed in 3GPP TS 38.104 V16.0.0 (July 2019), and depicted in Table 2 and Table 3:

**Table 2:**

| **NR *operating band*** | **Uplink (UL) *operating band* BS receive / UE transmit** | **Downlink (DL) *operating band* BS transmit / UE receive** | **Duplex Mode** |
|---|---|---|---|
| | **F_{UL,low} - F_{UL,high}** | **F_{DL,low} - F_{DL,high}** | |
| n1 | 1920 MHz - 1980 MHz | 2110 MHz-2170 MHz | FDD |
| n2 | 1850 MHz - 1910 MHz | 1930 MHz - 1990 MHz | FDD |
| n3 | 1710 MHz- 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n14 | 788 MHz - 798 MHz | 758 MHz - 768 MHz | FDD |
| n18 | 815 MHz - 830 MHz | 860 MHz - 875 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n30 | 2305 MHz - 2315 MHz | 2350 MHz - 2360 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n48 | 3550 MHz - 3700 MHz | 3550 MHz - 3700 MHz | TDD |
| n50 | 1432 MHz - 1517 MHz | 1432 MHz - 1517 MHz | TDD |
| n51 | 1427 MHz - 1432 MHz | 1427 MHz - 1432 MHz | TDD |
| n65 | 1920 MHz - 2010 MHz | 2110 MHz - 2200 MHz | FDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |
| [n90] | 2496 MHz - 2690 MHz | 2496 MHz - 2690 MHz | TDD |

**Table 3:**

| **NR *operating band*** | **Uplink (UL) and Downlink (DL) *operating band* BS transmit/receive UE transmit/receive** | **Duplex Mode** |
|---|---|---|
| | **F_{UL,low} - F_{UL,high}** | |
| | **F_{DL,low} - F_{DL,high}** | |
| n257 | 26500 MHz - 29500 MHz | TDD |
| n258 | 24250 MHz - 27500 MHz | TDD |
| n260 | 37000 MHz - 40000 MHz | TDD |
| n261 | 27500 MHz - 28350 MHz | TDD |

The number of LTE or 5G frequency bands and the level of signal enhancement can vary based on a particular wireless device, cellular node, or location. Additional domestic and international frequencies can also be included to offer increased functionality. Selected models of the signal booster 120 can be configured to operate with selected frequency bands based on the location of use. In another example, the signal booster 120 can automatically sense from the wireless device 110 or base station 130 (or GPS, etc.) which frequencies are used, which can be a benefit for international travelers.

In one configuration, multiple signal boosters can be used to amplify UL and DL signals. For example, a first signal booster can be used to amplify UL signals and a second signal booster can be used to amplify DL signals. In addition, different signal boosters can be used to amplify different frequency ranges.

In one configuration, the signal booster 120 can be configured to identify when the wireless device 110 receives a relatively strong downlink signal. An example of a strong downlink signal can be a downlink signal with a signal strength greater than approximately -80dBm. The signal booster 120 can be configured to automatically turn off selected features, such as amplification, to conserve battery life. When the signal booster 120 senses that the wireless device 110 is receiving a relatively weak downlink signal, the integrated booster can be configured to provide amplification of the downlink signal. An example of a weak downlink signal can be a downlink signal with a signal strength less than -80dBm.

In one example, the signal booster 120 can also include one or more of: a waterproof casing, a shock absorbent casing, a flip-cover, a wallet, or extra memory storage for the wireless device. In one example, extra memory storage can be achieved with a direct connection between the signal booster 120 and the wireless device 110. In another example, Near-Field Communications (NFC), Bluetooth v5.1, Bluetooth v5, Bluetooth v4.0, Bluetooth Low Energy, Bluetooth v4.1, Bluetooth v4.2, Bluetooth 5, Ultra High Frequency (UHF), 3GPP LTE, 3GPP 5G, Institute of Electronics and Electrical Engineers (IEEE) 802.11a, IEEE 802.11b, IEEE 802.11g, IEEE 802.11n, IEEE 802.11ac, or IEEE 802.11ad can be used to couple the signal booster 120 with the wireless device 110 to enable data from the wireless device 110 to be communicated to and stored in the extra memory storage that is integrated in the signal booster 120. Alternatively, a connector can be used to connect the wireless device 110 to the extra memory storage.

In one configuration, antennas such as monopole antennas, dipole antennas, log-periodic antennas, etc. can be used in commercial electronic devices. Antennas can receive various signals, such as personal communications service (PCS), Long Term Evolution (LTE) or Advanced Wireless Services (AWS). As further advancements in communication technology are made, there is a need for antennas to operate in additional frequency bands to provide improved coverage and data rates. Thus, antennas should be able to transmit and receive signals over desired frequency bands. 3GPP 5G communication is designated to occur in new frequency bands. These frequency bands will need new antennas that are specifically designed to operate efficiently within one or more of the 5G frequency bands.

In one example, broadband dipole antennas can be used for communication with commercial electronic devices. However, a bandwidth of a single dipole antenna can be limited, such that covering an entire operating band or frequency range (e.g., 1.695GHz to 2.7GHz) can be difficult. Moreover, controlling a beamwidth can be difficult for a single dipole antenna.

A traditional dipole antenna generally has a better bandwidth as compared to a patch antenna. A traditional air-fed dipole antenna is a moderately suitable candidate for use as a broadband antenna. However, these traditional antennas are unable to cover an entire cellular frequency band or frequency range with a favorable level of impedance matching. The radiating mechanism for a dipole antenna involves oscillating charges on the length of the dipole antenna. A dipole antenna is designed with element lengths that depend on a wavelength (λ) of a selected frequency. Designing an ultra-broadband antenna is difficult without a large number of elements. In addition, the length of the elements may not be conducive to the use of the antenna. An antenna system using two antennas in an array can change a gain and beamwidth of the antenna system, but this approach uses additional elements and a feeding network that can add complexity to the antenna design.

Parasitic elements can be added to an antenna to affect the antenna's radiation pattern and operation over a selected band. Each parasitic element can be a conductive element that is not electrically connected to the antenna. In general, a parasitic element (or passive radiator) in a wire antenna can be a conductive element, such as a metal rod or conductive geometric shape, that is not electrically coupled to other elements in the wire antenna.

Multi-element antennas, such as a Yagi-Uda antenna, can include a driven element that is connected to a radio receiver/transmitter through a feed line, as well as parasitic elements that are not electrically connected. The parasitic elements can serve to modify a radiation pattern of the radio waves emitted by the driven element, directing them in a beam in one direction, and increasing the wire antenna's directivity and gain. The parasitic element can achieve this by acting as a passive resonator (e.g., absorbing the radio waves from a nearby driven element and re-radiating them again with a different phase). The radio waves from different antenna elements can interfere, thereby strengthening the antenna's radiation in the desired direction, and cancelling out the radio waves in undesired directions. Some types of multi-element antennas, such as a log periodic antenna, do not have parasitic elements. For example, the log periodic antenna can only have driven elements that are connected to a radio receiver/transmitter through a feed line and not have any parasitic elements.

In general, parasitic elements in a wire antenna can be mounted parallel to the driven element, with the parasitic elements being in a line perpendicular to a direction of radiation of the wire antenna. The parasitic element can be one of two types - a reflector or a director. Reflectors can server to reflect radio waves in the opposite direction, while directors can server to increase the radiation in a given direction. In one example, a wire antenna can have a reflector on one side of the driven element, and one or more directors on the other side. When all of the elements are in a plane, a single reflector can be used since additional reflectors can provide minimal improvement in gain, but additional reflectors can be mounted above and below the plane of the wire antenna on a vertical bracket.

In the present technology, a directional 3-dimensional dipole antenna can include a vertical feed line and a horizontal dipole that is mounted over a ground plane. An input power can be coupled into the vertical feed line, and then can be capacitively coupled to the horizontal dipole. In order to improve impedance matching over a broad frequency bandwidth, additional parasitic elements can be positioned over the horizontal dipole.

In the present technology, the dipole antenna with parasitic element(s) can differ as compared to other types of antennas. For example, Yagi-Uda antennas can use a director (parasitic element) which has a specific length (e.g., a little smaller than λ/2 and distance to radiate at an operating frequency (narrow band). In addition, Yagi-Uda antennas can be used to obtain a directional beam and the parasitic elements can be placed in a direction of a beam like an array. In contrast, in the present technology, the parasitic elements can be less than λ/4 and can be used to control an impedance or a directional beam.

One parasitic element or multiple parasitic elements can improve impedance matching and enable the antenna to achieve a more directional radiation pattern. For example, when two parasitic elements are used for the dipole antenna, a beam direction of the dipole antenna may not be squint. In one example, the parasitic element(s) can be coupled to an inner surface of a radome that encloses the dipole antenna. Alternatively, the parasitic elements can be offset from the horizontal dipole using insulating (i.e. substantially non-conductive) supports.

For other antenna types, such as Yagi-Uda antennas, A Yagi-Uda antenna element can be placed at a center of a dipole element to constructively interfere. When the directors have offsets, a main beam direction can be changed to the offset direction. In contrast, in the present technology, the parasitic elements may not be placed at the center of the dipole element. Even if the parasitic element has an offset, the direction of the beam can still be boresight because the parasitic element can have a main effect on the impedance of the antenna.

The parasitic element(s) can cause the dipole antenna to undergo constructive interference and destructive interference of electromagnetic fields, such that the impedance matching and/or radiation pattern can be tuned for the dipole antenna. The electromagnetic fields can interfere constructively or destructively with each other, such that the impedance matching and/or the radiation pattern can be manipulated for the dipole antenna.

In one example, the dipole antenna can be an omni-directional antenna, but the ground plane can be added to cause the dipole antenna to be directional. The ground plane can be used as a reflector for the dipole antenna and the parasitic element(s) can be used as directors for the dipole antenna.

In one example, a height or distance between the parasitic element(s) and the horizontal dipole in the dipole antenna can be an important parameter for controlling the impedance matching, the radiation pattern and/or the directivity of the dipole antenna. In some cases, a single parasitic element may not be sufficient to improve the gain and impedance matching for ultra-broad frequency bands or ranges. Thus, one or more parasitic elements can be used to improve the gain and impedance matching for the dipole antenna.

In one example, one or more parasitic elements can be placed at a reduced distance (e.g., less than λ/4) from the horizontal dipole in order to cause an increased effect on the impedance matching for the dipole antenna. As used herein, λ is a wavelength of a center frequency of a signal or desired operating band of an antenna or antenna element.

In another example, one or more parasitic elements can be placed at a relatively increased distance (e.g., between λ/4 and λ/2) from the horizontal dipole to cause an increased effect on a radiation beamwidth of the dipole antenna. The induced electromagnetic fields can depend on the dimensions (e.g., shape and size) of the parasitic element(s). The dimensions of the parasitic element(s) can be changed in order to modify the impedance matching and radiation pattern of the dipole antenna. Thus, additional parasitic elements can provide increased design parameters to achieve broadband operation for the dipole antenna since the additional parasitic elements can provide additional reactance.

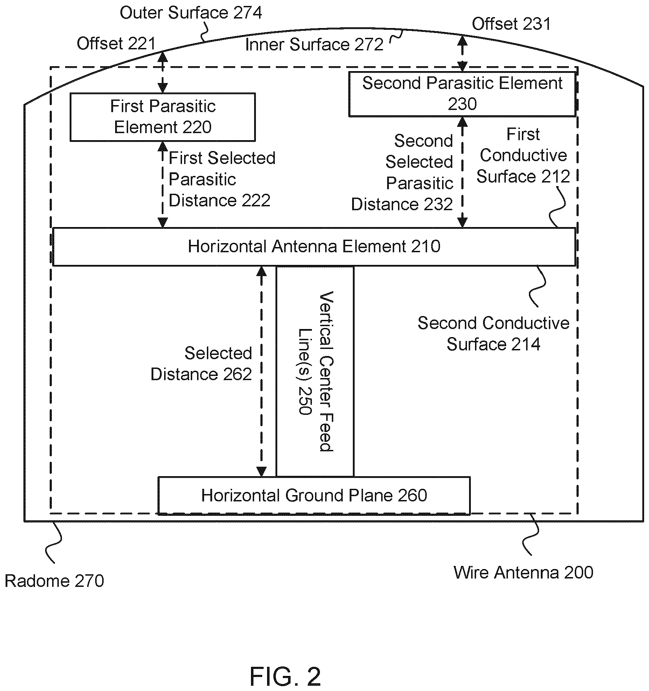

FIG. 2 illustrates an example of a wire antenna 200 (e.g., dipole antenna, dual-polarized dipole antenna or monopole antenna) having a horizontal antenna element 210, a first parasitic element 220, a second parasitic element 230, vertical center feed line(s) 250 and a horizontal ground plane 260. The horizontal antenna element 210 (e.g., horizontal dipole element) can be carried by the vertical center feed line(s) 250. The vertical center feed line(s) 250 can provide coupled energy to two parallel vertical center feed lines. For example, the vertical center feed line(s) 250 can include a top center feed line and a bottom center feed line, where the top center feed line and the bottom center feed line can have an alternating phase to enable operation of the wire antenna 200 as a dipole antenna. One dipole can be connected to the top center feed line and another dipole can be connected to a bottom center feed line.

In one example, more than two parasitic elements can be included in the wire antenna 200. For example, three or four parasitic elements can be on a same plane of the wire antenna 200. Additional parasitic elements can increase a total size of the wire antenna 200. To cover a broad operating frequency, two or more parasitic elements can be used, and depending on a parasitic distance between the parasitic element(s) and the horizontal antenna element 210, the parasitic element(s) can affect impedance matching and a directionality of the wire antenna 200.

In one example, the horizontal antenna element 210 can be a conductive element, such as a metal wire or rod, or a conductive element having a two dimensional surface area. The horizontal antenna element 210 can have a first conductive surface 212 and a second conductive surface 214 substantially opposite to the first conductive surface 212. The horizontal antenna element 210 can have an insulator between the first conductive surface 212 and the second conductive surface 214. The second conductive surface 214 of the horizontal antenna element 210 can be used to capacitively couple energy to the first conductive surface 212 of the horizontal antenna element 210. The horizontal antenna element 210 can be substantially orthogonal (e.g., 90 degrees plus/minus 20 degrees) to the vertical center feed line(s) 250.

In one example, the vertical center feed line(s) 250 can be connected to the second conductive surface 214 of the horizontal antenna element 210 and can be capacitively coupled to the first conductive surface 212 of the horizontal antenna element 210. In addition, the vertical center feed line(s) 250 can pass through one or more through holes on the second conductive surface 214 of the horizontal antenna element 210 to connect to the first conductive surface 212 of the horizontal antenna element 210.

In one example, the wire antenna 200 can be enclosed within a radome 270. The radome 270 can be a structural, weatherproof enclosure that protects the wire antenna 200. The radome 270 can be constructed of a material that minimally attenuates the electromagnetic signal transmitted or received by the wire antenna 200. The radome 270 can be constructed in various shapes, such as spherical, geodesic, planar, etc., and can use various construction materials, such as fiberglass, polytetrafluoroethylene (PTFE)-coated fabric, etc. For antennas designed for use in a mobile operation, such as attached to an exterior of a vehicle, the radome 270 can be constructed to have a fluid shape to minimize air drag.

In one example, the radome 270 can include an outer surface 274 and an inner surface 272 substantially opposite the outer surface 274. The first parasitic element 220 and the second parasitic element 230 can be physically attached to the inner surface 272 of the radome 270.

In one example, the first parasitic element 220 can be adjacent to the first conductive surface 212 of the horizontal antenna element 210 and spaced at a first selected parasitic distance 222 from the horizontal antenna element 210. The first parasitic element 230 can be substantially orthogonal (e.g., 90 degrees plus/minus 20 degrees) to the first parasitic element 220. The second parasitic element 230 can be adjacent to the first conductive surface 212 and spaced at a second selected parasitic distance 232 from the horizontal antenna element 210. The first parasitic element 220 and the second parasitic element 230 can be conductive elements (e.g., metal pieces) that are electrically isolated from the vertical center feed line(s) 250 and the horizontal antenna element 210, but may be attached with a non-conductive material, such as plastic, wood, or a composite material. In addition, the first parasitic element 220 and the second parasitic element 230 can be attached via offset(s) 221, 231, respectively, to the inner surface 272 of the 270 radome.

In one example, the first parasitic element 220 can be substantially co-planar with the horizontal antenna element 210 (e.g., 90 degrees plus/minus 20 degrees), and the second parasitic element 230 can be substantially co-planar with the horizontal antenna element 210 (e.g., 90 degrees plus/minus 20 degrees).

In one example, the horizontal ground plane 260 in the wire antenna 200 can be substantially parallel (coplanar) with the horizontal antenna element 210, +/-20 degrees. The horizontal ground plane 260 can be spaced a selected distance 262 from the horizontal antenna element 210 and can be electrically coupled to the vertical center feed line(s) 250. In addition, the horizontal ground plane 260 can be used as a reflector for the wire antenna 200 and the first and second parasitic elements 220, 230 can be used as directors for the wire antenna 200.

In one configuration, the wire antenna 200 can be configured to operate over a broad operating band or frequency range. For example, the wire antenna 200 can configured to operate over a broad operating band or frequency range of 1.7 GHz to 2.7 GHz. The first parasitic element 220 and the second parasitic element 230 can be designed to cover different bands or frequency ranges within the broad operating band or frequency range of the wire antenna 200. For example, the first parasitic element 220 can be configured for a first frequency range between approximately 1.7 GHz to 2.1 GHz, and the second parasitic element 230 can be configured for a second frequency range between approximately 2.1 GHz and 2.7 GHz.

In one configuration, the first selected parasitic distance 222 between the horizontal antenna element 210 and the first parasitic element 220, as well as the second selected parasitic distance 232 between the horizontal antenna element 210 and the second parasitic element 230, can be selected to be between λ\4 and λ\2, wherein λ is a wavelength of a radio wave. For example, the first selected parasitic distance 222 and/or the second selected parasitic distance 232 can be selected to be less than λ\4 in order to provide an increased effect on a level of impedance matching over broad operating band or frequency range of the wire antenna 200. In addition, a center frequency of the operating band (1.7 GHz to 2.7 GHz) is 2.2 GHz, and λ can be calculated with the center frequency (2.2 GHz).

In another example, the first selected parasitic distance 222 and/or the second selected parasitic distance 232 can be selected to be between λ\4 and λ\2 in order to provide an increased effect on a radiation beamwidth and a directivity for the wire antenna 200. In addition, the first parasitic element 220 and the second parasitic element 230 can cause constructive interference and destructive interference of electromagnetic fields to tune the level of impedance matching and the radiation beamwidth for the wire antenna 200.

In one example, the first parasitic element 220 and the second parasitic element 230 can have a shape and selected dimensions and be positioned at the first selected parasitic distance 222 and the second selected parasitic distance 232, respectively, from the horizontal antenna element 210 to provide the level of impedance matching over the broad operating band or frequency range of the wire antenna 200 and the radiation beamwidth for the wire antenna 200.

A shape of the first parasitic element 220 and a shape of the second parasitic element 230 can be one of: a square, a circle, a semicircle, a triangle, a rectangle, an ellipse, a polygon, a semicircle, a crescent, a ring, a trefoil, a quatrefoil, etc. The first parasitic element 220 can have a same shape as the second parasitic element 230, or the first parasitic element 220 can have a different shape as the second parasitic element 230. In one example, the shape and selected dimensions of the first parasitic element 220 and the second parasitic element 230, as well as the first selected parasitic distance 222 and the second selected parasitic distance 232, can be selected using a computer program simulation to achieve a desired result, including but not limited to a radiation pattern of the antenna 200 and a gain of the antenna over the antenna operating frequency

In one example, the first parametric element 220 can be rotated approximately 90 degrees (plus or minus 20 degrees) in relation to the second parasitic element 230. The first parametric element 220 can have first selected dimensions and be positioned at a location that is the first selected parasitic distance 222 from the horizontal antenna element 210. The second parasitic element 230 can have second selected dimensions and be positioned at a location that is the second selected parasitic distance 232 from the horizontal antenna element 210. In one example, the first selected parasitic distance 222 and the second selected parasitic distance 232 can be changed when the first parametric element 220 and the second parasitic element 230 are rotated. The polarization of the horizontal antenna element 210 is a linear polarization, and a response with an electric field from the horizontal antenna element 210 can be changed when the first parametric element 220 and the second parasitic element 230 are rotated.

In the example shown in FIG. 2, the second parasitic element 230 can have larger dimensions as compared to the first parasitic element 220, and the second selected parasitic distance 232 can be greater than the first selected parasitic distance 222. In addition, in this example, the first parametric element 220 can be for a first frequency range between approximately 1.7 GHz to 2.1 GHz, and the second parasitic element 230 can be for a second frequency range between approximately 2.1 GHz and 2.7 GHz.

As a non-limiting example, the first selected parasitic distance 222 and/or the second selected parasitic distance 232 can be 0.518 inches, and the selected distance 262 can be 1.2 inches. In addition, as a non-limiting example, the first parasitic element 220 and the second parasitic element 230 can each have a thickness of 0.04 inches.

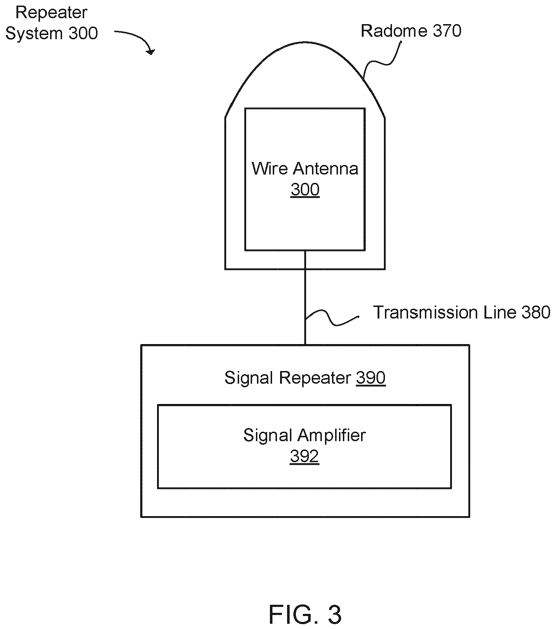

FIG. 3 illustrates an example of a repeater system 300 that includes a wire antenna 300 (e.g., a dipole antenna or monopole antenna) communicatively coupled to a signal repeater 390 (or signal booster). The wire antenna 300 can be enclosed within a radome 370. The wire antenna 300 can be communicatively coupled, via a transmission line 380 such as a coaxial cable, to a signal repeater 390 that includes a signal amplifier 392. The signal amplifier 392 can be a bidirectional repeater that is configured to amplify and filter uplink and downlink signals.

For example, the wire antenna 300 can receive an uplink signal from a mobile device (not shown), and the uplink signal can be provided to the signal amplifier 392 via a server antenna (not shown). The signal amplifier 392 can amplify and filter the uplink signal, and provide the amplified and filtered uplink signal to the wire antenna 300. The wire antenna 300 can transmit the amplified and filtered uplink signal to a base station (not shown). In another example, the wire antenna 300 can receive a downlink signal from the base station, and provide the downlink signal to the signal amplifier 392. The signal amplifier 392 can amplify and filter the downlink signal, and provide the amplified and filtered downlink signal to the server antenna. The server antenna can transmit the amplified and filtered downlink signal to the mobile device.

In one configuration, the wire antenna 300 and the signal repeater 390 can be installed in a building or stadium, or in a vehicle. For example, the wire antenna 300 can be a donor antenna configured to be installed on the exterior of a vehicle.

In one configuration, the wire antenna 300 can be used to communicate with a mobile device (i.e., as a server antenna) or to communicate with a base station (i.e., as a donor antenna).

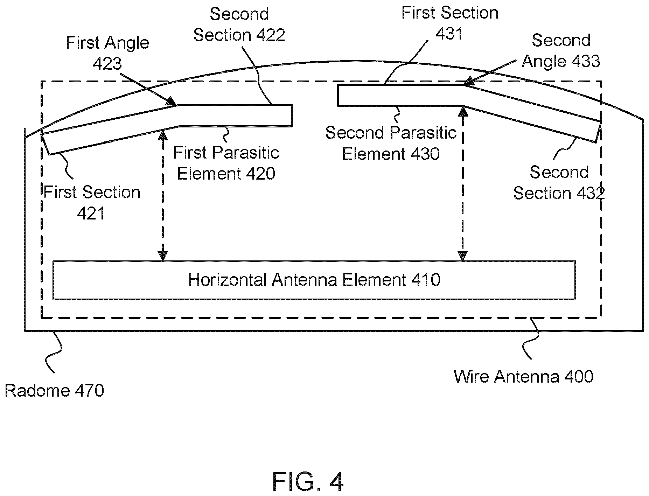

FIG. 4 illustrates a first parasitic element 420 and a second parasitic element 430 included in a wire antenna 400 (e.g., dipole antenna or monopole antenna). The wire antenna 400 can be included within a radome 470. The first parasitic element 420 can be at a first selected parasitic distance from a horizontal antenna element 410 (e.g., horizontal dipole element), and the second parasitic element 430 can be at a second selected parasitic distance from the horizontal antenna element 410. In addition, the first parasitic element 420 and the second parasitic element 430 can be vent or an edge can be chamfered.

In one example, the first parasitic element 420 can include a first section 421 and a second section 422, where the second section 422 of the first parasitic element 420 can be disposed at a first angle 423 relative to the first section 421 of the first parasitic element 420. The first angle 423 between the first section 421 of the first parasitic element 420 and the second section 422 of the first parasitic element 420 can be determined based on a configuration of the radome 470 that encloses the wire antenna 400.

In another example, the second parasitic element 430 can include a first section 431 and a second section 432, where the second section 432 of the second parasitic element 430 can be disposed at a second angle 433 relative to the first section 431 of the second parasitic element 430. The second angle 423 between the first section 431 of the second parasitic element 430 and the second section 422 of the second parasitic element 430 can be determined based on a configuration of the radome 470 that encloses the wire antenna 400.

As a non-limiting example, the first angle 423 and/or the second angle 433 can be approximately 15 degrees.

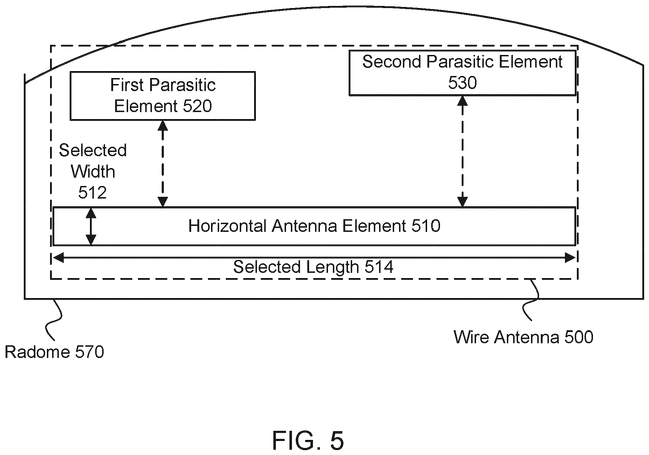

FIG. 5 illustrates an example of a wire antenna 500 (e.g., dipole antenna or monopole antenna) having a horizontal antenna element 510 and two parasitic elements, such as a first parasitic element 520 and a second parasitic element 530. The wire antenna 500 can be included within a radome 570. The wire antenna 500 can include a horizontal antenna element 510 (e.g., horizontal dipole element) having a selected width 512 and a selected length 514.

In one example, the first parasitic element 520 can be oriented substantially parallel or orthogonal (e.g., 90 degrees plus/minus 10 degrees) with the selected length 514 of the horizontal antenna element 510, or the first parasitic element 520 can be oriented substantially parallel or orthogonal with the selected width 512 of the horizontal antenna element 510. In another example, the second parasitic element 530 can be oriented substantially parallel or orthogonal (e.g., 90 degrees plus/minus 10 degrees) with the selected length 514 of the horizontal antenna element 510, or the second parasitic element 530 can be oriented substantially parallel or orthogonal with the selected width 512 of the horizontal antenna element 510.

As a non-limiting example, the selected length 514 of the horizontal antenna element 510 can be 3.804 inches and the selected width 512 of the horizontal antenna element 510 can be 1.403 inches.

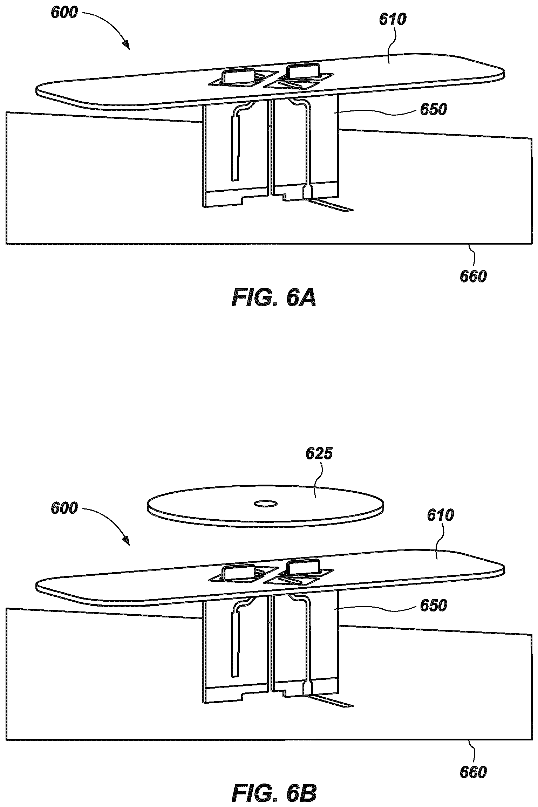

FIGS. 6A and 6B illustrates an example of a dipole antenna 600 (e.g., a capacitively fed dipole antenna). In FIG. 6A, the dipole antenna 600 can include a horizontal dipole element 610, vertical center feed line(s) 650, and a horizontal ground plane 660. In FIG. 6B, the dipole antenna 600 can include the horizontal dipole element 610, the vertical center feed line(s) 650, and the horizontal ground plane 660, as well as a single parasitic element 625. The single parasitic element 625 can be positioned above the horizontal dipole element 610 by a selected distance.

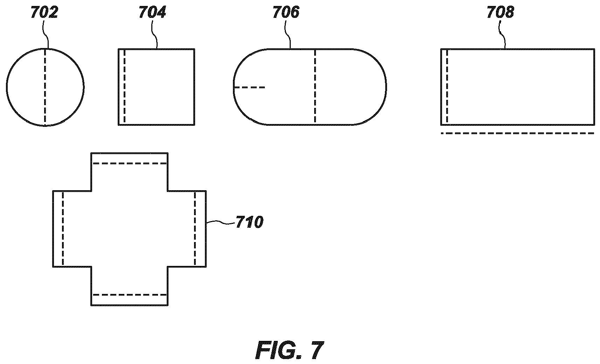

FIG. 7 illustrates examples of various shapes for parasitic elements useable for a wire antenna. The various shapes for the parasitic elements can include, but are not limited to, a square 704, a circle 702, a rectangle 708, an ellipse 706, a polygon, and a quatrefoil 710. Additional shapes that are not illustrated can include a triangle, a semicircle, a crescent, a ring, a trefoil, etc. A particular shape can be associated with particular dimensions, such as a length, width, radius, diameter, circumference, etc. In one example, induced electromagnetic fields can depend on the dimensions (e.g., shape and size) of the parasitic element(s), and the dimensions of the parasitic element(s) can be changed in order to modify a level of impedance matching and/or a radiation pattern of the wire antenna.

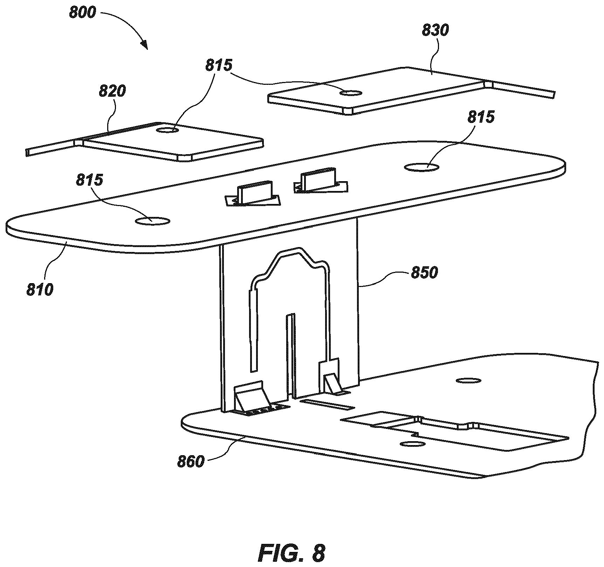

FIG. 8 illustrates an example of a dipole antenna 800 having a first parasitic element 820 and a second parasitic element 830. The dipole antenna 800 can further include a horizontal dipole element 810, vertical center feed line(s) 850, a horizontal ground plane 860, and through hole(s) 815 for physically attaching the first and second parasitic elements 820, 830 to a radome (not shown) that encloses the dipole antenna 800.

In the example shown in FIG. 8, the first parasitic element 820 can be rotated approximately 90 degrees in relation to the second parasitic element 830. The first parasitic element 820 and the second parasitic element 830 can be positioned and angled with respect to each other to fit inside the radome. In this example, the second parasitic element 830 can have increased dimensions in relation to the first parasitic element 820. In this example, a second selected parasitic distance between the second parasitic element 830 and the horizontal dipole element 810 can be greater than a first selected parasitic distance between the first parasitic element 820 and the horizontal dipole element 810. In addition, in this example, the relatively larger second parasitic element 830 can operate for a lower frequency band or frequency range, whereas the relatively smaller first parasitic element 820 can operate for a higher frequency band or frequency range.

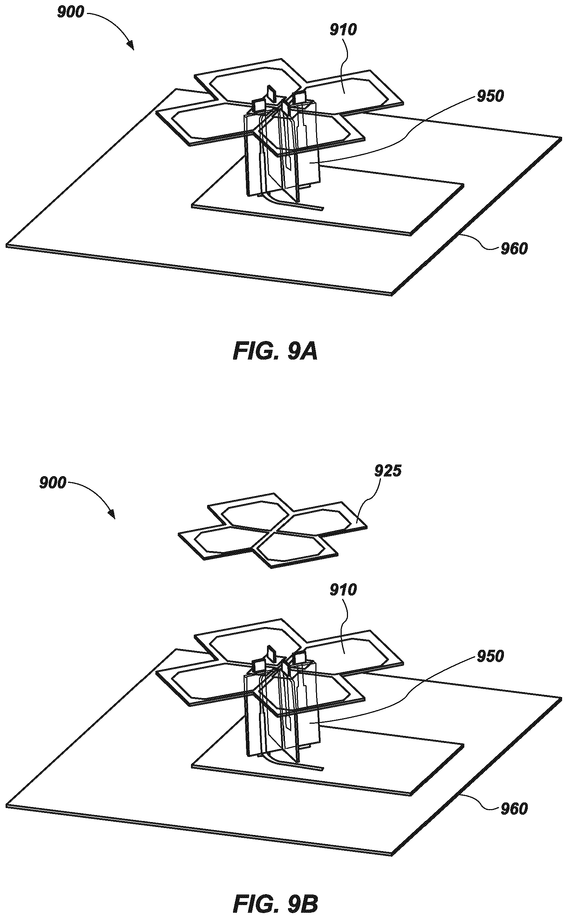

FIGS. 9A and 9B illustrates an example of a dual-polarized dipole antenna 900. In FIG. 9A, the dual-polarized dipole antenna 900 can include a horizontal dipole element 910, vertical center feed line(s) 950, and a horizontal ground plane 960. In FIG. 9B, the dual-polarized dipole antenna 900 can include the horizontal dipole element 910, the vertical center feed line(s) 950, and the horizontal ground plane 960, as well as a single parasitic element 925. The single parasitic element 925 can be positioned above the horizontal dipole element 910 by a selected distance.

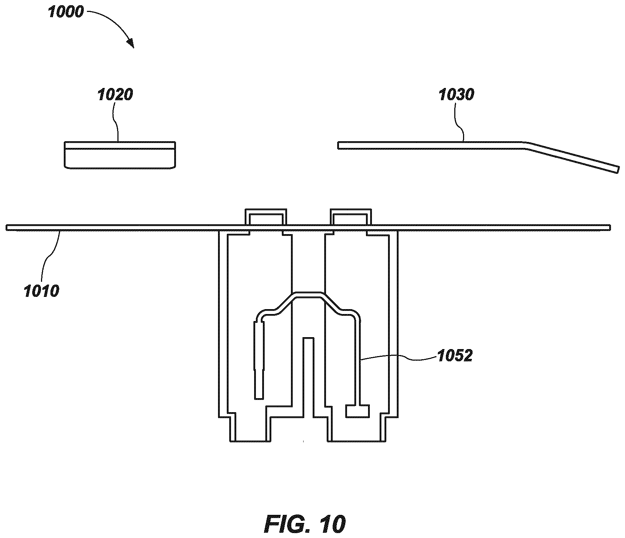

FIG. 10 illustrates an example of a dipole antenna 1000 having a horizontal antenna element 1010, a first parasitic element 1020, a second parasitic element 1030 and vertical center feed line(s) 1050. The vertical center feed line(s) 1050 can include a "J" shape feed line 1052 to provide coupled energy to two parallel vertical center feed lines. In other words, the vertical center feed line(s) 1050 can include two parallel vertical feed lines, to which coupled energy is provided to by the "J" shape feed line 1052.

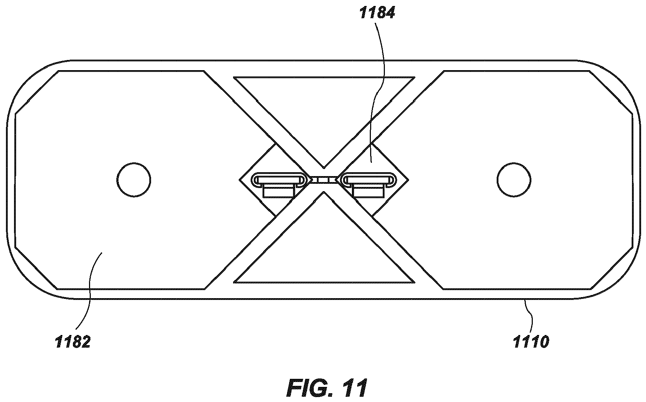

FIG. 11 illustrates an example of a horizontal dipole element 1110 for a dipole antenna. The horizontal dipole element 1110 can include a bottom copper pattern 1182 that comprises a radiating part, and a top copper pattern 1184 to capacitively couple the energy.

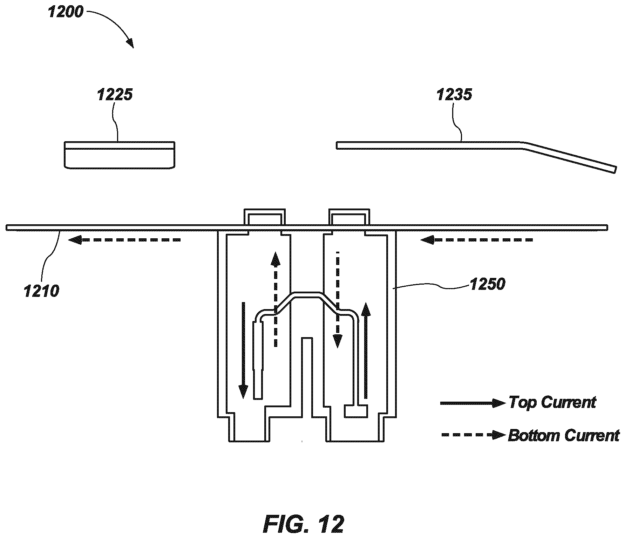

FIG. 12 illustrates an example of a dipole antenna 1200 having a horizontal antenna element 1210, a first parasitic element 1220, a second parasitic element 1230 and vertical center feed line(s) 1250. The vertical center feed line(s) 1050 can include two parallel vertical center feed lines, such as a top vertical center feed line and a bottom vertical center feed line. In addition, a top current can flow through the top vertical center feed line and a bottom current can flow through the bottom vertical center feed line, as shown in FIG. 12.

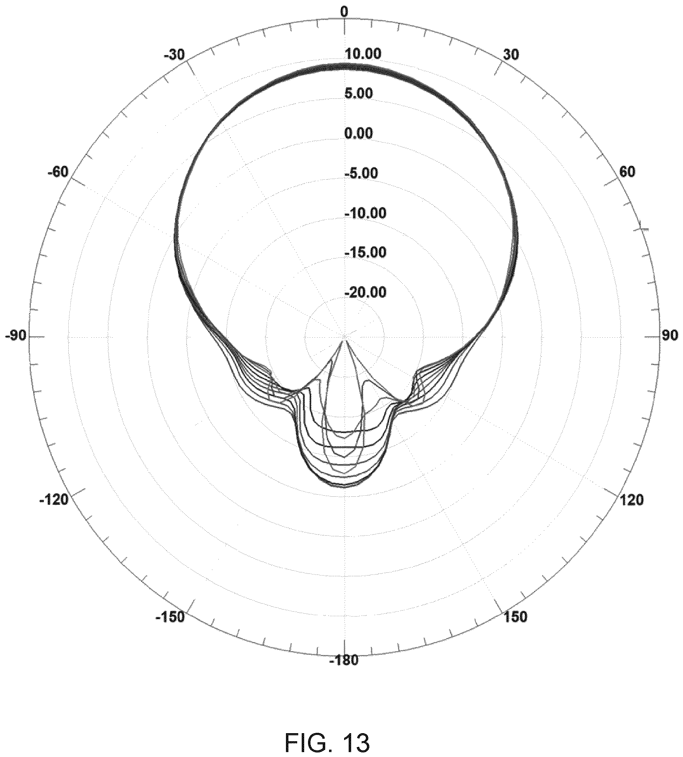

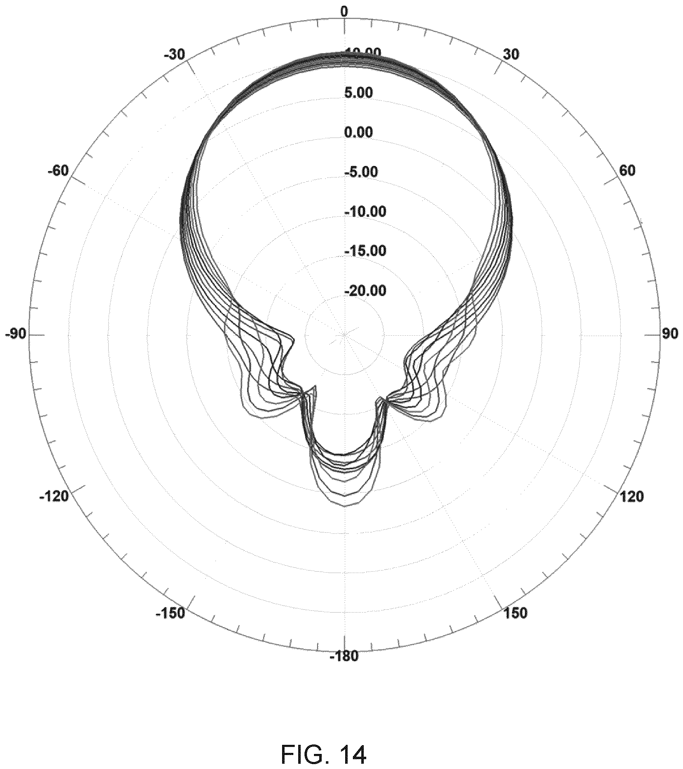

FIGS. 13 and 14 illustrate examples of radiation patterns for a dipole antenna that excludes a parasitic element versus a dipole antenna that includes a parasitic element. In particular, FIG. 13 illustrates a radiation pattern for a dipole antenna when a parasitic element is not used, and FIG. 14 illustrates a radiation pattern for a dipole antenna when a parasitic element is used. As shown by the radiation patterns, a gain, directivity and/or beamwidth can be improved for the dipole antenna when the dipole antenna employs a parasitic element versus not employing a parasitic element.

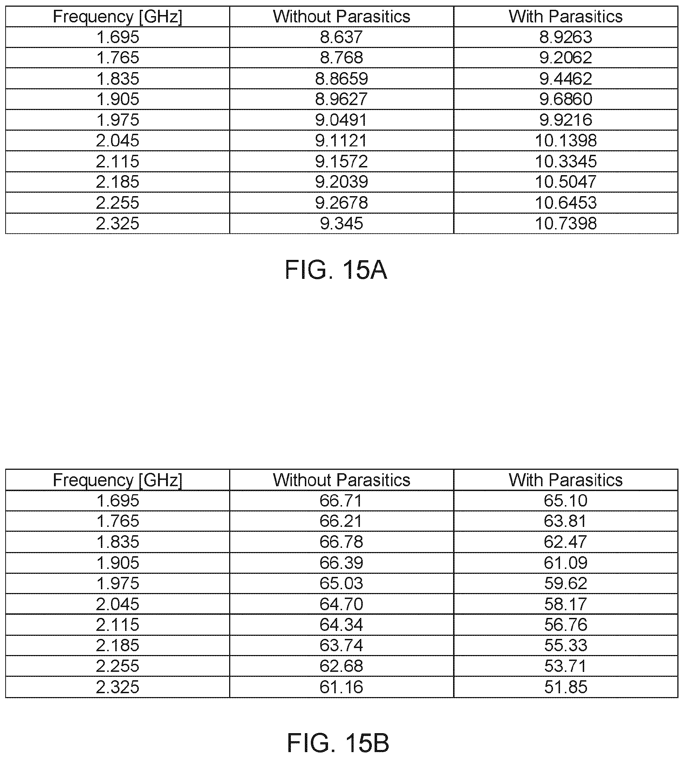

FIG. 15A is an exemplary table that shows a gain comparison (in dB) for a dipole antenna that excludes parasitic element(s) versus a dipole element that includes parasitic element(s). The gain comparison can be provided for a frequency range between 1.695 GHz and 2.325 GHz. As shown, for a given frequency, the gain when a parasitic element is used can be greater than when a parasitic element is not used.

FIG. 15B is an exemplary table that shows a beamwidth comparison (in degrees) for a dipole antenna that excludes parasitic element(s) versus a dipole element that includes parasitic element(s). The beamwidth comparison can be provided for a frequency range between 1.695 GHz and 2.325 GHz. As shown, for a given frequency, the beamwidth when a parasitic element is used can be less than when a parasitic element is not used, thereby achieving improved directionality when the parasitic element is used.

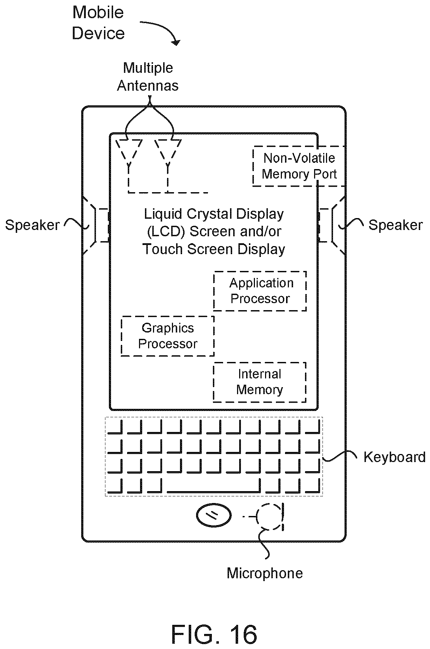

FIG. 16 provides an example illustration of the wireless device, such as a user equipment (UE), a mobile station (MS), a mobile communication device, a tablet, a handset, a wireless transceiver coupled to a processor, or other type of wireless device. The wireless device can include one or more antennas configured to communicate with a node or transmission station, such as an access point (AP), a base station (BS), an evolved Node B (eNB), a baseband unit (BBU), a remote radio head (RRH), a remote radio equipment (RRE), a relay station (RS), a radio equipment (RE), a remote radio unit (RRU), a central processing module (CPM), or other type of wireless wide area network (WWAN) access point. The wireless device can communicate using separate antennas for each wireless communication standard or shared antennas for multiple wireless communication standards. The wireless device can communicate in a wireless local area network (WLAN), a wireless personal area network (WPAN), and/or a WWAN.

FIG. 16 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be with the wireless device or wirelessly connected to the wireless device to provide additional user input. A virtual keyboard can also be provided using the touch screen.

### Examples

The following examples pertain to specific technology embodiments and point out specific features, elements, or actions that can be used or otherwise combined in achieving such embodiments.
Example 1 includes a wire antenna, comprising: a vertical center feed line; a horizontal antenna element carried by the vertical center feed line, the horizontal antenna element having a first conductive surface and a second conductive surface substantially opposite to the first conductive surface; a first parasitic element adjacent to the first conductive surface and spaced at a first selected parasitic distance from the horizontal antenna element; and a second parasitic element substantially orthogonal to the first parasitic element, the second parasitic element being adjacent to the first conductive surface and spaced at a second selected parasitic distance from the horizontal antenna element.
Example 2 includes the wire antenna of Example 1, further comprising a radome configured to enclose the wire antenna, wherein the radome includes an outer surface and an inner surface substantially opposite the outer surface, wherein the first parasitic element and the second parasitic element are attached to the inner surface of the radome.
Example 3 includes the wire antenna of any of Examples 1 to 2, wherein the first parasitic element and the second parasitic element are attached via an offset to the inner surface of the radome.
Example 4 includes the wire antenna of any of Examples 1 to 3, wherein: the first parasitic element includes a first section and a second section, wherein the second section of the first parasitic element is disposed at a first angle relative to the first section of the first parasitic element; and the second parasitic element includes a first section and a second section, wherein the second section of the second parasitic element is disposed at a second angle relative to the first section of the second parasitic element.
Example 5 includes the wire antenna of any of Examples 1 to 4, wherein: the first angle between the first section of the first parasitic element and the second section of the first parasitic element is determined based on a configuration of a radome that is configured to enclose the wire antenna; and the second angle between the first section of the second parasitic element and the second section of the second parasitic element is determined based on the configuration of the radome.
Example 6 includes the wire antenna of any of Examples 1 to 5, wherein the vertical center feed line is connected to the second conductive surface of the horizontal antenna element and is capacitively coupled to the first conductive surface of the horizontal antenna element.
Example 7 includes the wire antenna of any of Examples 1 to 6, wherein the horizontal antenna element has a selected width and a selected length.
Example 8 includes the wire antenna of any of Examples 1 to 7, wherein: the first parasitic element is oriented substantially parallel or orthogonal with the selected length of the horizontal antenna element; or the first parasitic element is oriented substantially parallel or orthogonal with the selected width of the horizontal antenna element.
Example 9 includes the wire antenna of any of Examples 1 to 8, wherein: the second parasitic element is oriented substantially parallel or orthogonal with the selected length of the horizontal antenna element; or the second parasitic element is oriented substantially parallel or orthogonal with the selected width of the horizontal antenna element.
Example 10 includes the wire antenna of any of Examples 1 to 9, wherein the vertical center feed line provides coupled energy to two parallel vertical center feed lines.
Example 11 includes the wire antenna of any of Examples 1 to 10, further comprising a horizontal ground plane substantially parallel with the horizontal antenna element, the horizontal ground plane spaced a selected distance from the horizontal antenna element and electrically coupled to the vertical center feed line.
Example 12 includes the wire antenna of any of Examples 1 to 11, wherein the vertical center feed line passes through one or more through holes on the second conductive surface of the horizontal antenna element to connect to the first conductive surface of the horizontal antenna element.
Example 13 includes the wire antenna of any of Examples 1 to 12, wherein the second conductive surface of the horizontal antenna element is used to capacitively couple energy to the first conductive surface of the horizontal antenna element.
Example 14 includes the wire antenna of any of Examples 1 to 13, wherein the first parasitic element and the second parasitic element are designed to cover different frequency ranges.
Example 15 includes the wire antenna of any of Examples 1 to 14, wherein the first parasitic element is configured for a first frequency range between approximately 1.7 Gigahertz (GHz) to 2.1 GHz, and the second parasitic element is configured for a second frequency range between approximately 2.1 GHz and 2.7 GHz.
Example 16 includes the wire antenna of any of Examples 1 to 15, wherein the first selected parasitic distance and the second selected parasitic distance are between λ\4 and λ\2, wherein λ is a wavelength.
Example 17 includes the wire antenna of any of Examples 1 to 16, wherein one or more of the first selected parasitic distance and the second selected parasitic distance are: less than λ\4 to provide an increased effect on a level of impedance matching over a broad operating frequency range of the wire antenna, wherein λ is a wavelength; or between λ\4 and λ\2 to provide an increased effect on a radiation beamwidth and a directivity for the wire antenna.
Example 18 includes the wire antenna of any of Examples 1 to 17, wherein the wire antenna is one of a dipole antenna, a folded dipole antenna or a monopole antenna.
Example 19 includes a dipole antenna, comprising: a horizontal dipole element; and one or more parasitic elements electrically isolated from the horizontal dipole element, wherein a parasitic element in the one or more parasitic elements has selected dimensions and is positioned at a selected distance from the horizontal dipole element to provide a level of impedance matching over a broad operating frequency range of the dipole antenna and a radiation beamwidth for the dipole antenna.
Example 20 includes the dipole antenna of Example 19, further comprising: a vertical center feed line that carries the horizontal dipole element; and a radome configured to enclose the one or more parasitic elements and be physically attached to the one or more parasitic elements.
Example 21 includes the dipole antenna of any of Examples 19 to 20, wherein the selected dimensions of the parasitic element and the selected distance between the parasitic element and the horizontal dipole element are selected using a computer program simulation.
Example 22 includes the dipole antenna of any of Examples 19 to 21, wherein: the one or more parasitic elements includes a first parasitic element and second parasitic element, and the first parasitic element is rotated approximately 90 degrees in relation to the second parasitic element; and the first parasitic element has first selected dimensions and is a first selected parasitic distance from the horizontal dipole element, and the second parasitic element has second selected dimensions and is a second selected parasitic distance from the horizontal dipole element.
Example 23 includes the dipole antenna of any of Examples 19 to 22, wherein the selected distance between the parasitic element and the horizontal dipole element is one of: less than λ\4 to provide an increased effect on the level of impedance matching over the broad operating frequency range of the dipole antenna, wherein λ is a wavelength; or between λ\4 and λ\2 to provide an increased effect on the radiation beamwidth and a directivity for the dipole antenna.
Example 24 includes the dipole antenna of any of Examples 19 to 23, wherein the one or more parasitic elements cause constructive interference and destructive interference of electromagnetic fields to tune the level of impedance matching and the radiation beamwidth for the dipole antenna.
Example 25 includes the dipole antenna of any of Examples 19 to 24, further comprising a horizontal ground plane electrically coupled to a vertical center feed line, wherein the horizontal ground plane is used as a reflector for the dipole antenna and the one or more parasitic elements are used as directors for the dipole antenna.
Example 26 includes the dipole antenna of any of Examples 19 to 25, wherein the dipole antenna is a dual-polarized antenna.
Example 27 includes the dipole antenna of any of Examples 19 to 26, wherein the broad operating frequency range of the dipole antenna is from approximately 1.7 Gigahertz (GHz) to 2.7 GHz.
Example 28 includes a repeater system, comprising: one or more amplification and filtering signal paths; and a wire antenna configured to be communicatively coupled to the one or more amplification and filtering signal paths, the wire antenna comprising: a vertical center feed line; a horizontal antenna element carried by the vertical center feed line, the horizontal antenna element having a first conductive surface and a second conductive surface substantially opposite to the first conductive surface; a first parasitic element adjacent to the first conductive surface and spaced at a first selected parasitic distance from the horizontal antenna element; and a second parasitic element substantially orthogonal to the first parasitic element, the second parasitic element being adjacent to the first conductive surface and spaced at a second selected parasitic distance from the horizontal antenna element.
Example 29 includes the repeater system of Example 28, wherein the wire antenna further comprises a radome configured to enclose the wire antenna, wherein the radome includes an outer surface and an inner surface substantially opposite the outer surface, wherein the first parasitic element and the second parasitic element are attached to the inner surface of the radome.
Example 30 includes the repeater system of any of Examples 28 to 29, wherein the wire antenna further comprises a horizontal ground plane adjacent to the second conductive surface and substantially parallel with the horizontal antenna element, the horizontal ground plane spaced a selected distance from the horizontal antenna element and electrically coupled to the vertical center feed line.
Example 31 includes the repeater system of any of Examples 28 to 30, wherein the first parasitic element of the wire antenna and the second parasitic element of the wire antenna are designed to cover different frequency ranges.
Example 32 includes the repeater system of any of Examples 28 to 31, wherein one or more of the first selected parasitic distance and the second selected parasitic distance are: less than λ\4 to provide an increased effect on a level of impedance matching over a broad operating frequency range of the wire antenna, wherein λ is a wavelength; or between λ\4 and λ\2 to provide an increased effect on a radiation beamwidth and a directivity for the wire antenna.
Example 33 includes the repeater system of any of Examples 28 to 32, wherein the wire antenna is one of a dipole antenna or a monopole antenna.

Various techniques, or certain aspects or portions thereof, can take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. Circuitry can include hardware, firmware, program code, executable code, computer instructions, and/or software. A non-transitory computer readable storage medium can be a computer readable storage medium that does not include signal. In the case of program code execution on programmable computers, the computing device can include a processor, a storage medium readable by the processor (including volatile and non-volatile memory and/or storage elements), at least one input device, and at least one output device. The volatile and non-volatile memory and/or storage elements can be a random-access memory (RAM), erasable programmable read only memory (EPROM), flash drive, optical drive, magnetic hard drive, solid state drive, or other medium for storing electronic data. One or more programs that can implement or utilize the various techniques described herein can use an application programming interface (API), reusable controls, and the like. Such programs can be implemented in a high level procedural or object oriented programming language to communicate with a computer system. However, the program(s) can be implemented in assembly or machine language, if desired. In any case, the language can be a compiled or interpreted language, and combined with hardware implementations.

As used herein, the term processor can include general purpose processors, specialized processors such as VLSI, FPGAs, or other types of specialized processors, as well as base band processors used in transceivers to send, receive, and process wireless communications.

It should be understood that many of the functional units described in this specification have been labeled as modules, in order to more particularly emphasize their implementation independence. For example, a module can be implemented as a hardware circuit comprising custom very-large-scale integration (VLSI) circuits or gate arrays, off-the-shelf semiconductors such as logic chips, transistors, or other discrete components. A module can also be implemented in programmable hardware devices such as field programmable gate arrays, programmable array logic, programmable logic devices or the like.

In one example, multiple hardware circuits or multiple processors can be used to implement the functional units described in this specification. For example, a first hardware circuit or a first processor can be used to perform processing operations and a second hardware circuit or a second processor (e.g., a transceiver or a baseband processor) can be used to communicate with other entities. The first hardware circuit and the second hardware circuit can be incorporated into a single hardware circuit, or alternatively, the first hardware circuit and the second hardware circuit can be separate hardware circuits.

Modules can also be implemented in software for execution by various types of processors. An identified module of executable code can, for instance, comprise one or more physical or logical blocks of computer instructions, which can, for instance, be organized as an object, procedure, or function. Nevertheless, the executables of an identified module need not be physically located together, but can comprise disparate instructions stored in different locations which, when joined logically together, comprise the module and achieve the stated purpose for the module.

Indeed, a module of executable code can be a single instruction, or many instructions, and can even be distributed over several different code segments, among different programs, and across several memory devices. Similarly, operational data can be identified and illustrated herein within modules, and can be embodied in any suitable form and organized within any suitable type of data structure. The operational data can be collected as a single data set, or can be distributed over different locations including over different storage devices, and can exist, at least partially, merely as electronic signals on a system or network. The modules can be passive or active, including agents operable to perform desired functions.

Reference throughout this specification to "an example" or "exemplary" means that a particular feature, structure, or characteristic described in connection with the example is included in at least one embodiment of the present invention. Thus, appearances of the phrases "in an example" or the word "exemplary" in various places throughout this specification are not necessarily all referring to the same embodiment.

As used herein, a plurality of items, structural elements, compositional elements, and/or materials can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention can be referred to herein along with alternatives for the various components thereof. It is understood that such embodiments, examples, and alternatives are not to be construed as defacto equivalents of one another, but are to be considered as separate and autonomous representations of the present invention.

Furthermore, the described features, structures, or characteristics can be combined in any suitable manner in one or more embodiments. In the following description, numerous specific details are provided, such as examples of layouts, distances, network examples, etc., to provide a thorough understanding of embodiments of the invention. One skilled in the relevant art will recognize, however, that the invention can be practiced without one or more of the specific details, or with other methods, components, layouts, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A wire antenna, comprising:
a vertical center feed line;
a horizontal antenna element carried by the vertical center feed line, the horizontal antenna element having a first conductive surface and a second conductive surface substantially opposite to the first conductive surface;
a first parasitic element adjacent to the first conductive surface and spaced at a first selected parasitic distance from the horizontal antenna element; and
a second parasitic element substantially orthogonal to the first parasitic element, the second parasitic element being adjacent to the first conductive surface and spaced at a second selected parasitic distance from the horizontal antenna element.

2. The wire antenna of claim 1, further comprising:
a radome configured to enclose the wire antenna, wherein the radome includes an outer surface and an inner surface substantially opposite the outer surface, wherein the first parasitic element and the second parasitic element are attached to the inner surface of the radome; and
a horizontal ground plane substantially parallel with the horizontal antenna element, the horizontal ground plane spaced a selected distance from the horizontal antenna element and electrically coupled to the vertical center feed line,
wherein the first parasitic element and the second parasitic element are attached via an offset to the inner surface of the radome.

3. The wire antenna of any of claims 1 to 2, wherein:
the first parasitic element includes a first section and a second section, wherein the second section of the first parasitic element is disposed at a first angle relative to the first section of the first parasitic element;
the second parasitic element includes a first section and a second section, wherein the second section of the second parasitic element is disposed at a second angle relative to the first section of the second parasitic element;
the first angle between the first section of the first parasitic element and the second section of the first parasitic element is determined based on a configuration of a radome that is configured to enclose the wire antenna; and
the second angle between the first section of the second parasitic element and the second section of the second parasitic element is determined based on the configuration of the radome.

4. The wire antenna of any of claims 1 to 3, wherein:
the vertical center feed line is connected to the second conductive surface of the horizontal antenna element and is capacitively coupled to the first conductive surface of the horizontal antenna element;
the horizontal antenna element has a selected width and a selected length; or
the vertical center feed line provides coupled energy to two parallel vertical center feed lines.

5. The wire antenna of any of claims 1 to 4, wherein:
the first parasitic element is oriented substantially parallel or orthogonal with a selected length of the horizontal antenna element;
the first parasitic element is oriented substantially parallel or orthogonal with a selected width of the horizontal antenna element;
the second parasitic element is oriented substantially parallel or orthogonal with the selected length of the horizontal antenna element; or
the second parasitic element is oriented substantially parallel or orthogonal with the selected width of the horizontal antenna element.

6. The wire antenna of any of claims 1 to 5, wherein:
the vertical center feed line passes through one or more through holes on the second conductive surface of the horizontal antenna element to connect to the first conductive surface of the horizontal antenna element;
the second conductive surface of the horizontal antenna element is used to capacitively couple energy to the first conductive surface of the horizontal antenna element;
the first parasitic element and the second parasitic element are designed to cover different frequency ranges;
the first parasitic element is configured for a first frequency range between approximately 1.7 Gigahertz (GHz) to 2.1 GHz, and the second parasitic element is configured for a second frequency range between approximately 2.1 GHz and 2.7 GHz;
the first selected parasitic distance and the second selected parasitic distance are between λ\4 and λ\2, wherein λ is a wavelength; or
the wire antenna is one of a dipole antenna, a folded dipole antenna, or a monopole antenna.

7. The wire antenna of any of claims 1 to 6, wherein one or more of the first selected parasitic distance and the second selected parasitic distance are:
less than λ\4 to provide an increased effect on a level of impedance matching over a broad operating frequency range of the wire antenna, wherein λ is a wavelength; or
between λ\4 and λ\2 to provide an increased effect on a radiation beamwidth and a directivity for the wire antenna.

8. A dipole antenna, comprising:
a horizontal dipole element; and
one or more parasitic elements electrically isolated from the horizontal dipole element,
wherein a parasitic element in the one or more parasitic elements has selected dimensions and is positioned at a selected distance from the horizontal dipole element to provide a level of impedance matching over a broad operating frequency range of the dipole antenna and a radiation beamwidth for the dipole antenna.

9. The dipole antenna of claim 8, further comprising:
a vertical center feed line that carries the horizontal dipole element;
a radome configured to enclose the one or more parasitic elements and be physically attached to the one or more parasitic elements; and
a horizontal ground plane electrically coupled to a vertical center feed line, wherein the horizontal ground plane is used as a reflector for the dipole antenna and the one or more parasitic elements are used as directors for the dipole antenna.

10. The dipole antenna of any of claims 8 to 9, wherein:
the selected dimensions of the parasitic element and the selected distance between the parasitic element and the horizontal dipole element are selected using a computer program simulation;
the one or more parasitic elements cause constructive interference and destructive interference of electromagnetic fields to tune the level of impedance matching and the radiation beamwidth for the dipole antenna;
the dipole antenna is a dual-polarized antenna; or
the broad operating frequency range of the dipole antenna is from approximately 1.7 Gigahertz (GHz) to 2.7 GHz.

11. The dipole antenna of any of claims 8 to 10, wherein:
the one or more parasitic elements includes a first parasitic element and second parasitic element, and the first parasitic element is rotated approximately 90 degrees in relation to the second parasitic element; and
the first parasitic element has first selected dimensions and is a first selected parasitic distance from the horizontal dipole element, and the second parasitic element has second selected dimensions and is a second selected parasitic distance from the horizontal dipole element.

12. The dipole antenna of any of claims 8 to 11, wherein the selected distance between the parasitic element and the horizontal dipole element is one of:
less than λ\4 to provide an increased effect on the level of impedance matching over the broad operating frequency range of the dipole antenna, wherein λ is a wavelength; or
between λ\4 and λ\2 to provide an increased effect on the radiation beamwidth and a directivity for the dipole antenna.

13. A repeater system, comprising:
one or more amplification and filtering signal paths; and
a wire antenna configured to be communicatively coupled to the one or more amplification and filtering signal paths, the wire antenna comprising:
a vertical center feed line;
a horizontal antenna element carried by the vertical center feed line, the horizontal antenna element having a first conductive surface and a second conductive surface substantially opposite to the first conductive surface;
a first parasitic element adjacent to the first conductive surface and spaced at a first selected parasitic distance from the horizontal antenna element; and
a second parasitic element substantially orthogonal to the first parasitic element, the second parasitic element being adjacent to the first conductive surface and spaced at a second selected parasitic distance from the horizontal antenna element.

14. The repeater system of claim 13, wherein:
the wire antenna further comprises a radome configured to enclose the wire antenna, wherein the radome includes an outer surface and an inner surface substantially opposite the outer surface, wherein the first parasitic element and the second parasitic element are attached to the inner surface of the radome;
the wire antenna further comprises a horizontal ground plane adjacent to the second conductive surface and substantially parallel with the horizontal antenna element, the horizontal ground plane spaced a selected distance from the horizontal antenna element and electrically coupled to the vertical center feed line;
the first parasitic element of the wire antenna and the second parasitic element of the wire antenna are designed to cover different frequency ranges; or
the wire antenna is one of a dipole antenna or a monopole antenna.

15. The repeater system of any of claims 13 to 14, wherein one or more of the first selected parasitic distance and the second selected parasitic distance are:
less than λ\4 to provide an increased effect on a level of impedance matching over a broad operating frequency range of the wire antenna, wherein λ is a wavelength; or
between λ\4 and λ\2 to provide an increased effect on a radiation beamwidth and a directivity for the wire antenna.
